(19) Europäisches Patentamt
European Patent Office
Office européen des brevets

(11) **EP 2 894 124 A1**

(12) **EUROPÄISCHE PATENTANMELDUNG**

(43) Veröffentlichungstag:
**15.07.2015 Patentblatt 2015/29**

(51) Int Cl.:
*C01B 3/00* (2006.01)  *H01M 8/06* (2006.01)
*H01M 12/08* (2006.01)  *C25B 1/00* (2006.01)
*H01M 8/18* (2006.01)

(21) Anmeldenummer: **14150421.7**

(22) Anmeldetag: **08.01.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Drenckhahn, Wolfgang, Dr.**
**91058 Erlangen (DE)**
• **Kühne, Michael, Dr.**
**90762 Fürth (DE)**

(54) **Elektrochemischer Energiespeicher mit externem, chemischem Speichermaterial**

(57) Die Erfindung betrifft einen elektrochemischen Energiespeicher (1) mit externem, chemischem Speichermaterial (20), welcher eine Anode (11) und eine Kathode (12) aufweist, sowie einen Ionen leitenden Elektrolyten (13), der zwischen Anode (11) und Kathode (12) angeordnet ist, wobei das Speichermaterial (20) in dem Energiespeicher (1) derart angeordnet ist, dass eine Mehrzahl an Strömungskanälen (25) in dem Speichermaterial (20) ausgebildet ist, und die Strömungskanäle derart ausgeformt sind, dass bei mindestens 80 Vol% des Speichermaterials (20) einem beliebigen Punkt (PSP) in dem Speichermaterial (20), wenigstens ein Punkt (PST) in einem benachbarten Strömungskanal (25) zugeordnet werden kann, so dass deren Abstand geringer ist als die Diffusionslänge (DL) eines Redoxfluids (15) in dem Speichermaterial (20), welches Redoxfluid (15) zwischen der Anode (11) und dem Speichermaterial (20) zur chemischen Energiespeicherung bzw. Energieausspeicherung vermittelt.

FIG 2

EP 2 894 124 A1

**Beschreibung**

Die vorliegende Erfindung betrifft einen elektrochemischen Energiespeicher mit externem, chemischem Speichermaterial, welcher eine Anode und eine Kathode aufweist, sowie einen Ionen leitenden Elektrolyten, der zwischen Anode und Kathode angeordnet ist. Weiter betrifft die Erfindung ein solches Speichermaterial.

Derartige elektrochemische Energiespeicher weisen typischerweise ein Redoxfluid auf, welches zwischen mindestens einer der beiden Elektroden (Anode, Kathode) und dem externen chemischen Speichermaterial elektrochemisch vermittelt. Diese elektrochemische Vermittlung umfasst neben der Umsetzung des Redoxfluids an mindestens einer Elektrode auch die chemische Umsetzung des externen chemischen Speichermaterials und damit die Speicherung von elektrischer Energie in chemischer Form in diesem.

Die für die Stromverteilung innerhalb eines elektrochemischen Energiespeichers notwendige elektronische Leitfähigkeit, welche in konventionellen Batterien über ein spezielles Leitfähigkeitsgerüst, beispielsweise eine Metallplatte oder ein Kohlefasermaterial bei gleichzeitig räumlich enger Verbindung von Leitfähigkeitsgerüst und Speichermaterial erreicht wird, wird im Falle des vorliegenden elektrochemischen Energiespeichers mit externem Speichermaterial in der Regel vollständig, zumindest aber teilweise durch ein Redoxfluid sicher gestellt.

Ein Stromfluss in elektrochemischen Energiespeichern tritt immer dann auf, wenn zwischen den beiden Elektroden des elektrochemischen Energiespeichers eine von den elektrochemischen Gleichgewichten abweichende Potenzialdifferenz anliegt. Wird von außen auf die beiden Elektroden des elektrochemischen Energiespeichers eine höhere Potenzialdifferenz aufgeprägt als es der Gleichgewichtslage entspricht, wird der Speicher geladen, im Falle geringerer Zellspannung als im Gleichgewicht erfolgt die Entladung des Energiespeichers. Insofern unterscheidet sich das Funktionsprinzip des elektrochemischen Energiespeichers mit externem Speichermaterial und Redoxfluid nicht von konventionellen Energiespeichern ohne Redoxfluid.

Anders als in konventionellen Energiespeichern ohne Redoxfluid wird bei elektrochemischen Energiespeichern mit Redoxfluid an den Elektroden zunächst mindestens teilweise das Redoxfluid umgesetzt in ein entsprechend umgesetztes Redoxfluid. Diese Umsetzung des Redoxfluids an einer Elektrode des elektrochemischen Energiespeichers führt gegenüber dem ursprünglichen Zustand zu einer Veränderung der chemischen Potenziale der Bestandteile des Redoxfluids, welche sich fortan auszugleichen suchen. Beispielsweise erfolgt der Ausgleich von Konzentrationsunterschieden mittels Diffusion. Um diesen Ausgleich zu beschleunigen, kann auch eine Durchmischung der Bestandteile des Redoxfluids durch Aufprägung einer Strömung und geeignete Strömungsführung erzwungen werden.

Für elektrochemische Energiespeicher geeignete Redoxfluide müssen sowohl mit mindestens einer Elektrode, als auch mit dem verwendeten Speichermaterial ein elektrochemisches Gleichgewicht eingehen können. Dies führt dazu, dass ein durch Elektrodenreaktion (also bei Stromfluss) gestörtes Gleichgewicht innerhalb des Redoxfluids nachgelagert (d.h. nach Vergleichmäßigung seiner Zusammensetzung) auch zu einer Reaktion des Redoxfluids mit dem Speichermaterial führt. Am Ende finden solange Ausgleichsprozesse z.B. durch Diffusion statt, bis alle elektrochemischen Potenziale sich ausgeglichen haben. Bei den dabei stattfindenden Phasenänderungen, insbesondere innerhalb des Speichermaterials, ist die Gesamtkapazität der Elektrode durch die Menge an elektrochemisch aktivem Material bestimmt, welches für das Redoxfluid insgesamt zugänglich ist.

Energiespeicher mit Redoxfluid, die auf dieser elektrochemischen Grundlage basieren, sind beispielsweise sogenannte Metall-Luft-Batterien, bei welchen etwa Wasserstoff zur Reduzierung eines Metalloxids genutzt wird. Der Wasserstoff ist hierbei ein Bestandteil des Redoxfluids, welches die chemische Umsetzung, d.h. die chemische Reduktion des Metalloxids zu einem niederwertigen Metalloxid bzw. zu einem elementaren Metall vermittelt. Ist das Metalloxid beispielsweise Eisenoxid ($FeO_x$), wird dieses etwa in einem Ladezustand, also beim Aufladen des elektrochemischen Energiespeichers zu elementarem Eisen oder zu Eisenoxid mit geringerer Oxidationsstufe ($FeO_{x-y}$) umgesetzt. Der Bestandteil Wasserstoff wird hierbei zunächst elektrochemisch an der Elektrode (im Sinne dieser Erfindung an der Anode) durch Reduktion von Wasserdampf erzeugt und damit im Redoxfluid angereichert, womit sich das Mengenverhältnis der Bestandteile des Redoxfluids verschiebt und über den Reaktionsraum hinweg ausgleicht. Letztlich wird der erzeugte zusätzliche Wasserstoff an der Oberfläche des Speichermaterials zumindest teilweise wieder zu Wasser (umgesetztes Redoxfluid) oxidiert, wobei im Gegenzug reduziertes (=geladenes) Speichermaterial entsteht. Im umgekehrten Fall der Entladung kann dem elementaren Eisen, oder Eisenoxid mit geringerer Oxidationsstufe, welches nun das externe chemische Speichermaterial bildet, Wasserdampf aus der elektrochemischen Umsetzung an der Elektrode zugeleitet werden. Bei der dabei erfolgenden chemischen Reaktion wird das elementare Eisen (bzw. das reduzierte Eisenoxid $FeO_{x-y}$) wiederum zu Eisenoxid ($FeO_x$) oxidiert, unter gleichzeitiger Reduktion des Wassers zu Wasserstoff. Eine derartige Metall-Luft-Batterie ist beispielsweise in der WO 2011/070006 A1 beschrieben.

Um eine effiziente Umsetzung des externen chemischen Speichermaterials zu gewährleisten, bei welcher das Redoxfluid stets ausreichende Mengen an umzusetzenden chemischen Speichermaterial vorfindet, bzw. mit diesem reagieren kann, lehrt die WO 2011/070006 A1 etwa, das Speichermaterial in gepressten Stäbchen in Strömungskanäle einer bipolaren Platte einzulegen. Durch diese Strömungskanäle wird das Redoxfluid zwischen Stäbchen und bipolarer Platte gezielt eingeströmt. Die Stäbchen sind hierbei vereinzelt in jeweils einem Strömungskanal eingelegt. Infolgedessen ergibt sich eine klare geometrische Anordnung der Stäbchen sowie eine kontrollierte Fülldichte der Kanäle.

Diese Anordnung ermöglicht zwar die Bereitstellung einer ausreichend großen Oberfläche für die chemische Umsetzung des chemischen Speichermaterials, jedoch stellt sich diese Anordnung als sehr platzintensive Anordnungsform dar, da kein Stäbchen in Kontakt mit einem anderen geraten kann.

Weiterhin nachteilig an der aus dem Stand der Technik bekannten Lösung ist, dass die Anordnung des chemischen Speichermaterials eine vorgeformte Trägerplatte (Bipolare Platte) erfordert, in welche das Speichermaterial in sehr arbeitsintensiver Form eingebracht werden muss. Ebenso erweist sich die aus dem Stand der Technik bekannte Lösung als wenig wartungsfreundlich, da bei ungewünschten Materialänderungen des Speichermaterials, dieses nur aus der Trägerplatte entfernt werden kann, wenn die Trägerplatte aus einem sie typischerweise umfassenden Modul ausgebaut wird. Weiterhin erfordert die aus dem Stand der Technik bekannte Lösung eine Führung des Redoxfluids unter Druck durch die Kanäle, so dass dieses nur durch eine geeignete Strömungsbeaufschlagung mit dem chemischen Speichermaterial ausreichend zur Reaktion gebracht werden kann.

Gemäß dieser aus dem Stand der Technik bekannten Nachteile, stellt es sich als wünschenswert heraus, einen elektrochemischen Energiespeicher vorzuschlagen, dessen Aufbau, die aus dem Stand der Technik bekannten Nachteile vermeiden kann. Insbesondere soll das chemische Speichermaterial in diesem Energiespeicher derart angeordnet sein, dass einerseits eine ausreichende chemische Umsetzung zwischen Redoxfluid und chemischem Speichermaterial erfolgen kann, andererseits dass eine kostengünstige Anordnung des chemischen Speichermaterials ermöglicht wird. Ebenso soll die Wartung des elektrochemischen Energiespeichers verbessert werden, die auch eine schnelle und komplikationslose Ersetzung des Speichermaterials erlauben soll.

Diese der Erfindung zugrunde liegenden Aufgaben werden gelöst durch einen elektrochemischen Energiespeicher gemäß Anspruch 1.

Insbesondere werden diese der Erfindung zugrunde liegenden Aufgaben gelöst durch einen elektrochemischen Energiespeicher mit externem, chemischen Speichermaterial, welcher eine Anode und eine Kathode aufweist, sowie einen Ionen leitenden Elektrolyten, der zwischen Anode und Kathode angeordnet ist, wobei das Speichermaterial in dem Energiespeicher derart angeordnet ist, dass eine Mehrzahl an Strömungskanälen in dem Speichermaterial ausgebildet ist, und die Strömungskanäle derart ausgeformt sind, dass bei mindestens 80 Vol% des Speichermaterials einem beliebigen Punkt (PSP) in dem Speichermaterial, wenigstens ein Punkt (PST) in einem benachbarten Strömungskanal zugeordnet werden kann, so dass deren Abstand geringer ist als die Diffusionslänge (DL) eines Redoxfluids in dem Speichermaterial, welches Redoxfluid zwischen der Anode und dem Speichermaterial zur chemischen Energiespeicherung bzw. Energieausspeicherung vermittelt.

An dieser Stelle soll darauf hingewiesen werden, dass das Redoxfluid sowohl im Sinne eines nicht umgesetzten, als auch im Sinne eines umgesetzten bzw. teilweise umgesetzten) Redoxfluids verstanden werden kann. Insbesondere ist das Redoxfluid als ein Fluid eines Fluidpaares ausgebildet, wobei das Fluidpaar ein Redoxpaar ist.

Weiter soll darauf hingewiesen werden, dass das chemische Speichermaterial dann als extern zu betrachten ist, wenn zum einen die Speicherung von elektrischer Energie nach elektrochemischer Umsetzung in einem chemisch umgesetzten Material in Form von chemischer Energie erfolgt, und zudem die chemische Kommunikation zwischen der zutreffenden Elektrode und dem chemischen Speichermaterial über das Redoxfluid vermittelt erfolgt. In anderen Worten sind die zutreffende Elektrode und das Speichermaterial nicht festkörperlich miteinander verbunden und die chemische Kommunikation erfolgt vermittelt durch das Redoxfluid. Würde man im Umkehrschluss das Redoxfluid aus dem System entfernen, käme die Einspeicherung bzw. Ausspeicherung von elektrischer Energie zum Erliegen, bzw. könnte nicht erfolgen.

Weiter ist darauf hinzuweisen, dass der Ionen leitende Elektrolyt insbesondere ein Festkörperelektrolyt ist. Dieser kann zudem spezifisch Sauerstoff-Ionen leitend sein. Ein solcher Sauerstoff-Ionen leitender Elektrolyt eignet sich besonders für einen Einsatz zusammen mit $H_2O$, $H_2$ bzw. eine Mischung aus beiden als Redoxfluid.

Erfindungsgemäß wird also vorgeschlagen, die Strömungskanäle nicht mehr ausschließlich in einer Trägerplatte (Bipolare Platte) vorzusehen, in welcher das Speichermaterial eingelegt wird, sondern die Strömungskanäle können selbst in das Speichermaterial eingefügt sein, bzw. das Speichermaterial ist derart geformt, dass Strömungskanäle darin ausgebildet sind. Um eine ausreichend hohe Reaktionsrate zwischen Redoxfluid und chemischem Speichermaterial gewährleisten zu können, liegen mindestens 80 Vol% des Speichermaterials in einer derartigen Anordnung vor, dass einem beliebigen Punkt (PSP) in dem Speichermaterial, wenigstens ein Punkt (PST) in einem benachbarten Strömungskanal zugeordnet werden kann, so dass deren Abstand geringer ist als die Diffusionslänge (DL) des Redoxfluids in dem Speichermaterial. Somit kann erreicht werden, dass das Redoxfluid wenigstens aus dem benachbarten Strömungskanal soweit in das Speichermaterial eindiffundieren kann, um eine effiziente Ausnutzung des Speichermaterials vorzunehmen. Erfindungsgemäß können also wenigstens 80% des Speichermaterials über Diffusion des Redoxfluids zur chemischen Umsetzung erreicht werden. Damit unterscheidet sich die Anordnung des Speichermaterials etwa von einem nicht von

Strömungskanälen durchdrungenen Block an Speichermaterial, dass durch die gezielte Anordnung von Strömungskanälen im Verhältnis zur Geometrie des Speichermaterials eine effiziente Speichermaterialausnutzung erreicht werden kann, ohne dass das Speichermaterial in eigens dafür vorgesehene Kanäle einer Trägerplatte eingebracht werden müsste. Vielmehr können nun auch einzelne Stücke von Speichermaterial miteinander in Kontakt sein, ohne dass nun die Nutzung des Speichermaterials Nachteile erleiden würde.

Weiter sieht die Erfindung vor, dass wenigstens 80 Vol% des Speichermaterials durch Diffusion durch das Redoxfluid erreicht und umgesetzt werden kann. Wird eine regelmäßige Anordnung des Speichermaterials vorgenommen, kann dieser Wert sogar bis 100 Vol% nach oben vergrößert werden, da durch die Berechnung der jeweils zutreffenden Diffusionskonstante für das Speichermaterial die Dicken des Speichermaterials leicht bestimmt werden können. Sollte das Speichermaterial jedoch zufällig verteilt sein, und die Strömungskanäle nicht regelmäßig verlaufen, kann nicht ausgeschlossen werden, dass auch Bereiche existieren, welche nicht ohne weiteres innerhalb einer vorgegebenen Zeitspanne durch das Redoxfluid durch Diffusion durch das Speichermaterial erreicht werden können. Durch statistische Abschätzungen kann jedoch erreicht werden, dass je nach Formgebung des Speichermaterials, auch bei zufälliger Anordnung des Speichermaterials noch eine sehr große Menge des Speichermaterials über Diffusion durch das Redoxfluid zur Umsetzung erreicht werden kann.

Die Diffusion des Redoxfluids in dem Speichermaterial ist hierbei ein physikalischer Prozess, bei welchem das Redoxfluid in das Speichermaterial eindringt, um dort umgesetzt zu werden und gleichzeitig das Speichermaterial selbst umzusetzen. Die Diffusion basiert auf einer mikroskopischen Zufallsbewegung des Redoxfluids in dem Speichermaterial. Je nach Reaktionsumgebung, d.h. je nach Speichermaterial kann das Redoxfluid auf seinem Weg durch das Speichermaterial mit diesem reagieren. In makroskopischer Sicht wird somit ein Stofftransport in dem Speichermaterial und nach Umsetzung auch aus dem Speichermaterial bewirkt, nämlich dann, wenn das umgesetzte Redoxfluid wieder aus dem Speichermaterial austritt. Die Triebgröße der Diffusion entspricht im Wesentlichen einem Konzentrationsunterschied von Redoxfluid in dem Speichermaterial und berechnet sich etwa nach dem ersten Fick'schen Gesetz gemäß der Gleichung (1):

$$J = - D\ \partial c/\partial x, \tag{1}$$

wobei Teilchenstromdichte J (mol m$^{-2}$ s$^{-1}$) proportional zum Konzentrationsgradienten entgegen der Diffusionsrichtung $\partial c/\partial x$ (mol·m$^{-4}$) ist. Die Proportionalitätskonstante ist der Diffusionskoeffizient D (m$^2$ s$^{-1}$). Die Diffusionslänge DL kann demnach definiert werden gemäß Gleichung (2):

$$DL = \sqrt{(D\ t),} \tag{2}$$

wobei t die Diffusionsdauer (s) ist. Unter Annahme von einer technisch maximal wünschenswerten Diffusionsdauer von 1 Stunde und einem typischen Diffusionskoeffizient von 10$^{-7}$ m$^2$/s lässt sich eine bevorzugte Diffusionslänge von etwa 2 cm berechnen. Gemäß einer besonders bevorzugten Ausführungsform der Erfindung ist die Diffusionslänge zwischen 1 cm und 3 cm. Diese geometrischen Ausmaße erlauben einerseits eine leichte Fertigung von vereinzelten Stücken an Speichermaterial, von vergleichbaren Abmessungen, und ermöglichen zudem eine gute und zuverlässige Durchdringung von Redoxfluid zur Umsetzung.

Entsprechend einer weiteren besonders bevorzugten Ausführungsform der Erfindung ist vorgesehen, dass die Strömungskanäle im Wesentlichen stochastisch verlaufen. Als stochastisch soll hier eine zufällige Ordnung bezeichnet werden, welche insbesondere durch einen Vorgang der zufälligen Anordnung erreicht wird. Das Redoxfluid hat hierbei typischerweise abschnittsweise die Möglichkeit, mehrere verschiedene Strömungswege zu nehmen, wobei diese Strömungswege in keiner festen Ordnung zueinander stehen. Eine stochastische Anordnung kann beispielsweise durch eine nicht weiter kontrollierte Schüttung des Speichermaterials in ein Behältnis erreicht werden. Die stochastische Anordnung ermöglicht hierbei insbesondere hinsichtlich des Fertigungsaufwandes bzw. Anordnungsaufwands vorteilhafte Ergebnisse. Ebenfalls kann durch die stochastische Anordnung der Strömungskanäle eine Strömungsführung erreicht werden, die zu einer wenigstens teilweise turbulenten Mischung des Redoxfluids führt. Folglich kann die anderenfalls diffusionsbegrenzte Umsetzung zwischen Redoxfluid und chemischem Speichermaterial noch durch eine konvektive Komponente verbessert werden. Wird also beispielsweise in den aus dem Stand der Technik bekannten Kanälen in erster Linie eine laminare Strömungsführung des Redoxfluids zu erwarten sein, kann durch die stochastische Anordnung der Strömungskanäle eine weitere Verbesserung der Reaktionsrate zwischen Redoxfluid und chemischem Speichermaterial erwartet werden.

Ganz besonders bevorzugt liegt das Speichermaterial als eine Gesamtheit von vereinzelten Stücken vor, die insbesondere ohne Nahordnung zueinander angeordnet sind, und die Strömungskanäle insbesondere stochastisch zwischen diesen Stücken verlaufen. Eine Nahordnung soll sich vorliegend auf eine mögliche Ordnung über die mittlere Gesamtausdehnung von etwa 5 Stücken erstrecken. Die mittlere Gesamtausdehnung betrifft hierbei die größte mittlere Gesamtausdehnung, welche sich aus der Geometrie eines Stücks ergibt. Vorzugsweise ist diese mittlere Gesamtausdehnung nicht größer als 30 mm und nicht kleiner als 10 mm. In diesem Raumbereich, also in einem Abstand von etwa 5 mittleren Ausdehnungslängen soll ausführungsgemäß keine geordnete Anordnung der einzelnen Stücke vorliegen. Dabei ist zu berücksichtigen, dass eine Nahordnung bei deutlich kleineren mittleren Gesamtausdehnungen sich möglicherweise auch bei einer stochastischen Anordnung der Stücke eine Nahordnung einstellt bzw. einstellen kann. Die Anfertigung bzw. Anordnung der vereinzelten Stücke in dem elektrochemischen Speicher erfolgt typischerweise in einem einfach zu kontrollierenden Vorgang. So ist es beispielsweise ausreichend, eine Anzahl an Stücken in ein Behältnis zu schütten. Die Anordnung, die sich dabei einstellt, erfüllt im Normalfall, dass sich die dabei ausbildenden Strömungskanäle stochastisch zwischen diesen Stücken verteilen. Folglich ergeben sich wiederum die Vorteile der stochastischen Anordnung der Strömungskanäle. Die vereinzelten Stücke sind hierbei hinsichtlich ihrer Größe bzw. Ausformung und Geometrie soweit anzupassen, dass die sich ausbildenden Strömungskanäle stets ausreichend sind, um 80 Vol% des Speichermaterials durch Diffusion zu erreichen.

Bei einer solchen stückigen Ausführung ist für die Ausbildung der Strömungskanäle also keine Trägerplatte mehr notwendig. Vielmehr kann das chemische Speichermaterial in einem einfachen Behältnis angeordnet sein, welches keine strömungsführenden Bauteile aufweisen muss. So ist beispielsweise ein einfaches Rohrstück zur Aufnahme des chemischen Speichermaterials durchaus ausreichend. Aufgrund der einfachen Anordnung des Speichermaterials kann dieses auch verhältnismäßig leicht ausgetauscht bzw. gewartet werden, sollte dies aufgrund von Materialveränderungen erforderlich sein.

Ausführungsgemäß ist weiterhin vorgesehen, dass die Raumausfüllung in dem Speichermaterial (20) zwischen 30% und 90% beträgt, also das Speichermaterial 30% bis 90% ausfüllt und der restliche Raum von den stochastisch verteilten Strömungskanälen eingenommen ist. Die Größe des Speichermaterials soll hierbei in Bezug auf seine äußeren geometrischen Abmessungen bewertet werden, auch wenn etwa darin Poren vorliegen. Solche Poren sollen also vorliegend nicht weiter berücksichtigt werden. Damit erlaubt das chemische Speichermaterial einerseits eine ausreichend große Speicherkapazität und andererseits ausreichend Raum für die Strömungskanäle, um Redoxfluid in ausreichenden Mengen umzusetzen. Damit wird ein elektrochemischer Energiespeicher mit hohen Energiein- und -ausspeicherdichten ausgebildet. Aufgrund der Raumausfüllung (Raumerfüllungsdichte) des Speichermaterials kann weiterhin stets gewährleistet werden, dass Moleküle des Redoxfluids in ausreichender Nähe zu dem chemischen Speichermaterial gelangen, welches zur chemischen Umsetzung vorgesehen ist.

Gemäß einer besonders bevorzugten Ausführungsform der Erfindung ist vorgesehen, dass die vereinzelten Stücke des Speichermaterials eine maximale Ausdehnung von höchstens 30 mm aufweisen. Wie weiter oben bereits ausgeführt, kann so einerseits gewährleistet werden, dass eine leichte Fertigung von vereinzelten Stücken an Speichermaterial, von vergleichbaren Abmessungen, erfolgen kann und die Abmessungen ermöglichen zudem eine gute und zuverlässige Durchdringung von Redoxfluid zur Umsetzung desselben. Wie für den Fachmann unmittelbar ersichtlich, ergibt sich diese besonders bevorzugte Ausführungsform der Erfindung aus inhärenten Stoffeigenschaften, wie vorstehend bereits in den Gleichungen 1 und 2 ausgeführt, sowie der beabsichtigten Zeitdauer, in welcher das Speichermaterial geladen bzw. entladen werden soll. Mit einem Speichermaterial, welches im Wesentlichen die aktiven Bestandteile Eisenoxid und Eisen umfasst, wurde bei Temperaturen um 800 °C eine Diffusionskonstante um $2*10^{-7}$ m$^2$/s gemessen. Soll eine Speicherdauer von mindestens einer Stunde (=$3,6*10^3$ s) erreicht werden, so ergibt sich aus Gleichung 2 eine Diffusionslänge von ca. 2,7 cm. Entsprechend sind bei höheren Diffusionskonstanten, welche sich durch geeignete, modifizierte Herstellungsmethoden für das Speichermaterial einstellen lassen, aufgrund der höheren Diffusionslängen auch größere Einzelstücke an Speichermaterial zulässig, während bei geringerer Diffusionskonstante und vergleichbarer Ein- und Ausspeicherungsdauer entsprechend kleinere Geometrien für die Einzelstücke des Speichermaterials gewählt werden sollten.

Entsprechend einer besonders bevorzugten Ausführungsform der Erfindung, ist vorgesehen, dass der Ionen leitende Elektrolyt als Festkörperelektrolyt ausgebildet ist. Dieser kann etwa spezifisch Ionen leitend sein, also nur für eine oder mehrere vorbestimmte Ionenspezies geeignet leitfähig. Insbesondere ist der Ionen leitende Elektrolyt Sauerstoff-Ionen leitend. Damit eignet sich der Ionen leitende Elektrolyt für den Einsatz eines elektrochemischen Energiespeichers, welcher Wasser/Wasserstoff als Redoxfluid einsetzt. Das Redoxfluid ist also bevorzugt Wasser/Wasserstoff oder auch eine Mischung von beidem.

An dieser Stelle sei auch darauf hingewiesen, dass Anode und Kathode je nach Aufladezustand bzw. Entladezustand ihre Bezeichnungen ändern. Bevorzugt ist vorliegend die Anode als Minuspol, d.h. negative Elektrode, während eines Entladezustands ausgebildet und entsprechend die Kathode als Pluspol, bzw. positive Elektrode.

Gemäß einer Weiterführung der Erfindungsidee, ist vorgesehen, dass wenigstens teilweise, bevorzugt ausschließlich jedes vereinzelte Stück des Speichermaterials einen Kanal aufweist, welcher das Stück durchdringt. Der Kanal erlaubt die Vergrößerung der Reaktionsoberfläche des Stücks und gleichzeitig eine Verringerung der mittleren Querschnittsausdehnung der ausgebildeten Strömungskanäle. Folglich erweist sich diese Ausführungsform als besonders vorteilhaft, um eine ausreichend hohe Reaktionsrate zwischen Redoxfluid und dem chemischen Speichermaterial und damit eine weitgehend vollständige Umsetzung gewährleisten zu können.

Entsprechend einer weiteren, ebenfalls bevorzugten Ausführungsform der Erfindung ist vorgesehen, dass das vereinzelte Stück eine geometrische Symmetrie aufweist, welche vor allem eine Spiegelsymmetrie und/oder eine Drehsymmetrie ist. Demgemäß sind die Stücke leichter herstellbar in technischen Verfahren, wobei zudem die mittlere Beabstandung einzelner Stücke in einer zufälligen Anordnung, etwa in einer Schüttung, ebenfalls einfacher mathematisch zu berechnen ist. Insbesondere bei der Ausführung eines vereinzelten Stücks als Kugel, kann die mittlere Ausdehnung der stochastisch angeordneten Strömungskanäle gut berechnet werden.

Gemäß einer weiteren weiterführenden Ausführungsform ist vorgesehen, dass der Kanal durch ein vereinzeltes Stück derart verläuft, dass eine symmetrische Gesamtform von Stück und Kanal resultiert. Auch in Bezug auf solche Stücke, kann eine Herstellung leichter erreicht werden, sowie die mittlere Ausdehnung der sich ausbildenden Strömungskanäle zwischen zufällig zueinander angeordneten Stücken leichter kontrolliert werden.

Gemäß einer weiteren besonders bevorzugten Ausführungsform der Erfindung ist vorgesehen, dass die Stücke wenigstens teilweise die Form eines Torus aufweisen. Ebenso können diese Tori ellipsoide Gestalt aufweisen, bzw. geometrisch verzerrt sein. Insbesondere weist der Kanal in der Mitte eines solchen Torus eine mittlere maximale Querschnittausdehnung (Querschnitt durch die Rotationssymmetrieachse) von höchstens 20 mm auf. Dadurch kann wiederum (bei einer Diffusionskonstante um $10^{-7}$ m$^2$/s) gewährleistet werden, dass die sich ausbildenden Strömungskanäle zwischen einzelnen Stücken ausreichend klein sind, um eine auch diffusionsgetriebene vollständige Reaktion zwischen Redoxfluid und chemischem Speichermaterial erlauben zu können.

Entsprechend eines weiteren Aspekts der Erfindung ist vorgesehen, dass die Stücke wenigstens teilweise die Form eines Quaders aufweisen, welche in dem Energiespeicher insbesondere derart angeordnet sind, dass sich ein Stück an einer vorbestimmten Quaderfläche mit einem benachbarten Stück in flächigem Kontakt befindet. Der flächige Kontakt kann hierbei bevorzugt der Strömungsführung und Ausbildung von geeigneten Strömungskanälen dienen, dann etwa wenn mehrere Stücke derart miteinander kontaktiert werden, dass sich zwischen benachbarten Stücken ein freier Strömungskanal ausbildet, in welchen Redoxfluid eingeleitet werden kann. Auch diese Formen können besonders leicht in einer Großmengenproduktion kostengünstig hergestellt werden.

Gemäß einer vorteilhaften Ausführungsform der Erfindung ist vorgesehen, dass die Strömungskanäle wenigstens teilweise jeweils eine im Wesentlichen einheitliche mittlere Verlaufsrichtung aufweisen, bevorzugt parallel zueinander verlaufen. Damit lässt sich das Redoxfluid gezielt zwischen dem Speichermaterial transportieren, indem nämlich weitgehend gerichtete Strömungen ausbilden. Dieser Transport ist wesentlich, wenn etwa Redoxfluid zur weiteren Umsetzung nachgeliefert werden soll bzw. umgesetztes Redoxfluid aus dem Speichermaterial entfernt und z.B. zur Elektrode transportiert werden soll. Weiterhin können so Taschen vermieden werden, durch welche eine solche Nachlieferung bzw. ein Fluidaustausch verhindert werden könnte.

Entsprechend einer Weiterführung dieser Ausführungsform ist vorgesehen, dass zwei benachbarte Strömungskanäle nicht weiter als die mittlere Diffusionslänge des Redoxfluids bei regulären Betriebsbedingungen des Energiespeichers voneinander entfernt sind. Benachbart sind jeweils zwei Strömungskanäle, wenn diese über ihren mittleren Längenverlauf im Vergleich zu anderen Strömungskanälen am wenigsten beabstandet sind. Die Nachbarschaft zweier Strömungskanäle lässt sich einfach durch Anfertigen eines Querschnitts entsprechend einer Schnittebene aller Strömungskanäle bestimmen. Sind zwei Strömungskanäle nicht weiter als die mittlere Diffusionslänge voneinander entfernt, ist auch gleichzeitig gewährleistet, dass die Ausdehnung des Speichermaterials die mittlere Diffusionslänge des Redoxfluids in dem Speichermaterial nicht überschreitet. Insofern gewährleistet die ausführungsgemäße Anordnung zweier benachbarter Strömungskanäle wiederum eine ausreichend hohe Reaktionsrate zwischen Redoxfluid und dem chemischen Speichermaterial bzw. eine weitgehend vollständige Umsetzung.

Gemäß einer vorteilhaften Ausführungsform der Erfindung ist vorgesehen, dass Strömungskanäle eine geometrische Symmetrie aufweisen, welche vor allem eine Spiegelsymmetrie und/oder eine Drehsymmetrie ist. Demnach können besonders effizient und unter Verminderung von Strömungsverlusten die Versorgung und der Abtransport von Redoxfluid aus dem Energiespeicher erreicht werden.

Entsprechend einer ganz besonders bevorzugten Ausführungsform der Erfindung ist vorgesehen, dass der Energiespeicher als Metall-Luft-Speicher ausgebildet ist. Ein Metall-Luft-Speicher weist hierbei eine Luftelektrode auf, wobei das chemische Speichermaterial mit der entsprechend gegenpoligen Elektrode in chemischem Kontakt zur Energiespeicherung steht. Die gegenpolige Elektrode ist folglich diejenige Elektrode, welche über das Redoxfluid mit dem elektrochemischen Speichermaterial in chemischem Kontakt steht. Metall-Luft-Speicher haben insbesondere eine Anzahl an technischen Vorteilen, welche sie etwa auch für den Einsatz als großtechnische elektrochemische Energiespeicher geeignet machen. Darüber hinaus sind sie eine gut verstandene Technologie, die vorteilhaft durch ein chemisches Speichermaterial zur Erweiterung der Speicherkapazität ausgebaut werden kann.

Entsprechend einer weiteren besonders bevorzugten Ausführungsform der Erfindung ist vorgesehen, dass das chemische Speichermaterial als Eisen, Eisenoxid oder eine Mischung von Eisen und Eisenoxid ausgebildet ist bzw. diese(s) umfasst. Diese Materialien sind leicht und kostengünstig bereitzustellen. Zudem lassen sich diese Materialien auch vorteilhaft als Pulver verarbeiten, so dass sie etwa mit geeigneten Kanälen versehen werden können bzw. als vereinzelte Stücke geformt werden können. Weiterhin sind diese Materialien besonders kostengünstig. Ebenso eignen sich diese in Verbindung mit einem Metall-Luft-Speicher, der als Redoxfluid das Redoxpaar $H_2/H_2O$ aufweist.

Nachfolgend soll die Erfindung anhand von einzelnen in Figuren dargestellten Beispielen erläutert werden. Hierbei sei darauf hingewiesen, dass die Figuren lediglich schematisch zu verstehen sind, und keine Einschränkung hinsichtlich der Ausführbarkeit darstellen.

Weiter sei darauf hingewiesen, dass technische Merkmale die mit gleichen Bezugszeichen versehen sind, gleiche technische Wirkungen aufweisen.

Ebenso sei darauf hingewiesen, dass die technischen Merkmale, die nachfolgend in den Figuren beschrieben werden, für sich alleine, wie auch in beliebiger Kombination miteinander beansprucht werden, soweit die Kombination die der Erfindung zugrundeliegenden Aufgaben lösen kann.

Hierbei zeigen:

FIG 1    eine schematische Darstellung eines elektrochemischen Energiespeichers 1 gemäß einer ersten Ausführungsform der Erfindung;

FIG 2    ein Behältnis zur Aufnahme von chemischem Speichermaterial, wie es beispielsweise in Verbindung mit einem elektrochemischen Energiespeicher gemäß FIG 1 verwendet werden kann;

FIG 3    ein vereinzeltes Stück eines chemischen Speichermaterials, wie es beispielsweise sich in dem Behältnis gemäß FIG 2 befindet;

FIG 4    eine schematische Darstellung eines elektrochemischen Energiespeichers 1 gemäß einer weiteren Ausführungsform der Erfindung in seitlicher Schnittansicht;

FIG 5    eine schematische Darstellung eines elektrochemischen Energiespeichers 1 gemäß der Ausführungsform der Erfindung in FIG 4 in einer Schnittansicht von oben;

FIG 6    eine schematische Darstellung eines elektrochemischen Energiespeichers 1 gemäß einer weiteren Ausführungsform der Erfindung in seitlicher Schnittansicht;

FIG 7    eine schematische Darstellung eines elektrochemischen Energiespeichers 1 gemäß der Ausführungsform der Erfindung in FIG 6 in einer Schnittansicht von oben.

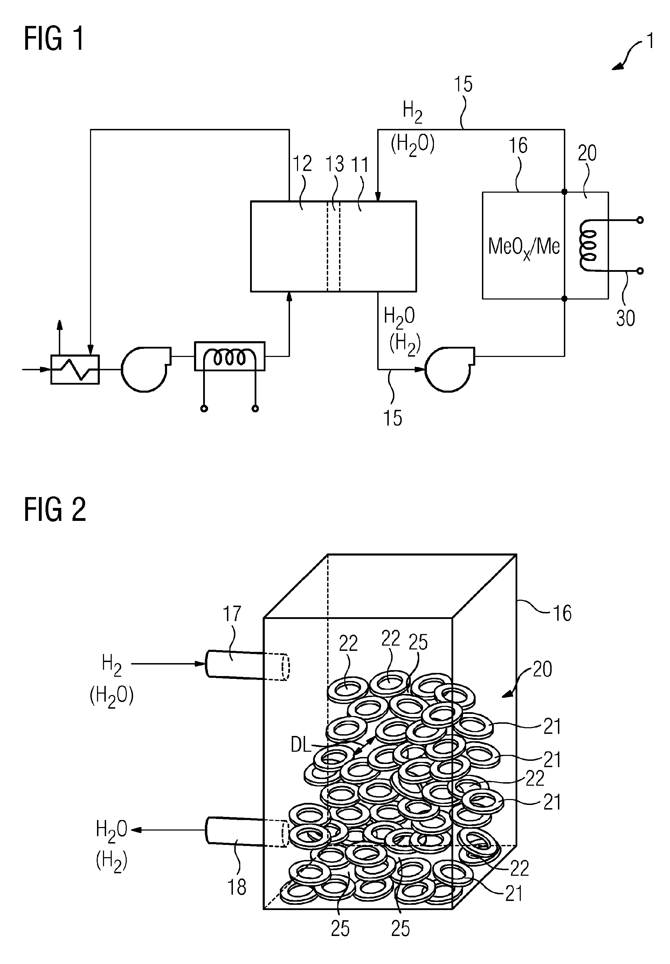

FIG 1 zeigt eine Ausführungsform eines erfindungsgemäßen elektrochemischen Energiespeichers 1, welcher neben einer Anode 11 eine Kathode 12 sowie einen beide Elektroden 11, 12 trennenden Ionen leitenden Elektrolyten 13 aufweist. Weiter weist der elektrochemische Energiespeicher 1 ein chemisches Speichermaterial 20 auf, welches sich beispielsweise in einem Behältnis 16 befindet. Bei Betrieb des elektrochemischen Energiespeichers 1 wird etwa Luft bzw. Sauerstoff ($O_2$) der Kathode 12 zugeleitet, die als Luft-Elektrode ausgebildet ist. Bei Aufladung des elektrochemischen Energiespeichers 1 wird Wasserstoff ($H_2$) elektrochemisch im Redoxfluid 15 angereichert, welcher mit dem chemischen Speichermaterial 20 reagiert.

An der Anode 11 wird das Wasser erneut aufgrund des Anliegens einer geeigneten Potenzialdifferenz gegenüber der Kathode 12 in Wasserstoff umgesetzt, wobei das dabei frei werdende Sauerstoff-Ion durch den Ionen leitenden Elektrolyt 13 hindurch tritt und auf der Seite der Kathode 12 zu Sauerstoff reagiert. Dieser Sauerstoff kann nun beispielsweise mit dem Luft- bzw. Sauerstoffstrom in die Umgebung ausgetragen werden. Zum Wärmeausgleich aus diesem Strom kann bspw. ein Wärmetauscher vorgesehen sein, welcher erlaubt, die Wärme nutzbringend auf ein geeignetes Wärmefluid zu übertragen.

Das chemische Speichermaterial 20 liegt zu diesem Zeitpunkt etwa als Metalloxid ($MeO_x$) vor und wird infolge der Reaktion mit dem Wasserstoff reduziert. Reaktionsbedingt entsteht dabei das gediegene Metall (Me), oder eine reduzierte Form $MeO_{x-y}$ des Metalloxids, welches nun als geladenes chemisches Speichermaterial 20 vorliegt, sowie Wasser ($H_2O$) als umgesetzter Redoxfluid-Anteil.

Bei Entladen des elektrochemischen Energiespeichers 1 wird Wasserstoff an der Anode 11 umgesetzt und damit Wasser im Redoxfluid angereichert, welches typischerweise auf einem hohen Temperaturniveau in dampfförmiger Form vorliegt. Das Wasser reagiert nun mit dem in dem Behältnis 16 vorliegenden Metall (Me), bzw. dem reduzierten Metalloxid $MeO_{x-y}$, welches als chemisches Speichermaterial 20 bereit steht, wiederum zu Metalloxid (MeO). Hierbei wird erneut Wasserstoff frei, welcher der Anode 11 zugeführt wird, um dort mit einem durch den Ionen leitenden Elektrolyten 13 hindurch getretenen Sauerstoff-Ion zu Wasser zu reagieren. Das Sauerstoff-Ion entstammt hierbei dem Luftsauerstoff, welcher aufgrund einer an der Anode 11 erfolgenden elektrochemischen Reaktion gebildet wird.

Sollten die Betriebsreaktionsbedingungen es erfordern, dass das chemische Speichermaterial 20 in dem Behältnis 16 vermehrt mit thermischer Energie versorgt wird, kann für diesen Fall in dem Behältnis 16 eine elektrische Heizvorrichtung 30, welche beispielsweise als Heizwendel ausgeführt ist, vorgesehen sein. Eine Erwärmung ist jedoch nach der vorliegenden Ausführungsform nicht während des Entladebetriebs des elektrochemischen Energiespeichers 1 erforderlich, da bei der Entladung, d.h. der Reaktion von Metall (Me) und Wasser ($H_2O$) ausreichend Reaktionswärme

frei wird. Diese kann bei geeigneter Abführung weiteren Nutzungen zur Verfügung gestellt werden, wie weiter oben bereits ausgeführt.

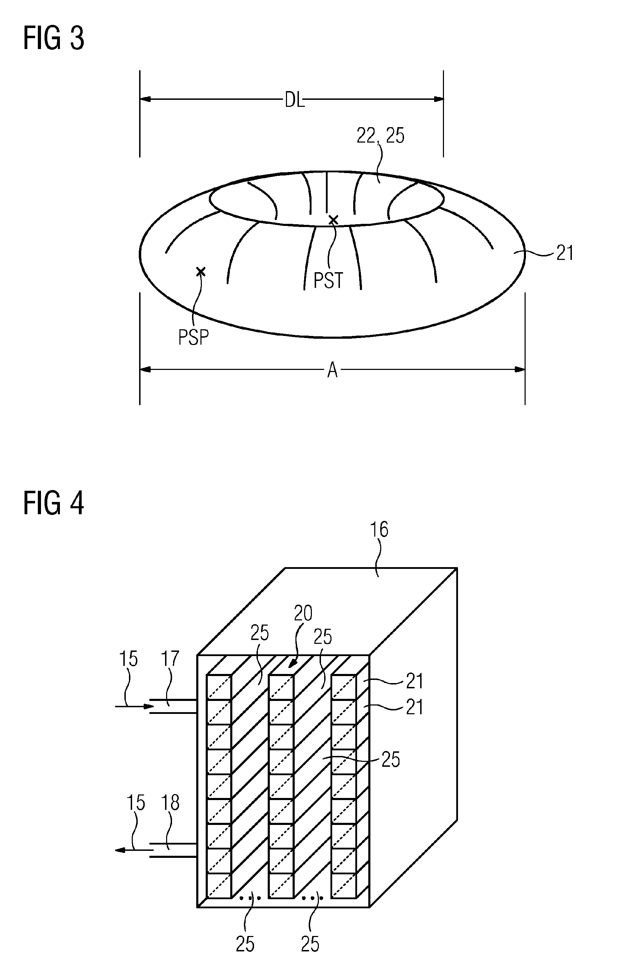

FIG 2 zeigt ein Behältnis 16, in welches chemisches Speichermaterial 20 eingefüllt wurde, wie es beispielsweise in Verbindung mit der Ausführungsform des elektrochemischen Energiespeichers 1 gemäß FIG 1 genutzt werden kann. Das Behältnis 16 weist zur Zu- bzw. Ableitung des Redoxfluids 15 eine Zuleitung 17 bzw. eine Ableitung 18 auf. In dem Behältnis 16 sind vereinzelte Stücke 21 des chemischen Speichermaterials 20 in zufälliger Weise als Schüttung angeordnet. Die vereinzelten Stücke 21 weisen hierbei die Form eines Torus auf, welcher einen Körperrand aufweist, der einen mittigen Kanal 22 umgibt. Die vereinzelten Stücke 21 können hierbei auch unterschiedliche Größen aufweisen. Zwischen den vereinzelten Stücken 21 bzw. in den Kanälen 22 bilden sich Strömungskanäle 25 aus, welche aufgrund der zufälligen Anordnungen der vereinzelten Stücke 21 im Wesentlichen stochastisch angeordnet sind. Infolgedessen nimmt ein Redoxfluid 15, welches beispielsweise über die Zuleitung 17 dem Behältnis 16 zugeführt wird, auch einen stochastischen Strömungsweg durch das Behältnis 16, bevor es über die Ableitung 18 aus dem Behältnis 16 entfernt wird. Auf seinem Strömungsweg vermag das Redoxfluid 15 zur chemischen Umsetzung mit dem chemischen Speichermaterial 20 zu reagieren. Hierbei ändert sich sowohl das chemische Speichermaterial 20, wie auch das Redoxfluid 15. Um die Reaktionsrate ausreichend schnell zu gestalten, ist erfindungsgemäß vorgesehen, dass das Speichermaterial 20 als vereinzelte Stücke 21 vorliegt und die Strömungskanäle 25 derart ausgeformt sind, dass bei mindestens 80 Vol% des Speichermaterials 20 einem beliebigen Punkt PSP (vorliegend nicht gezeigt) in dem Speichermaterial 20, wenigstens ein Punkt PST (vorliegend nicht gezeigt) in einem benachbarten Strömungskanal 25 zugeordnet werden kann, so dass deren Abstand geringer ist als die Diffusionslänge DL (vorliegend nicht bezeichnet) des Redoxfluids 15 ($H_2$/$H_2O$) in dem Speichermaterial 20, welches Redoxfluid 15 zwischen der Anode 11 und dem Speichermaterial 20 zur chemischen Energiespeicherung bzw. Energieausspeicherung vermittelt. Diese geometrischen Verhältnisse sind im Detail nochmals in FIG 3 dargestellt.

Gleichzeitig kann vorgesehen sein, dass bei mindestens 80 Vol% des Speichermaterials 20 zwei benachbarte Strömungskanäle 25 nicht weiter als die mittlere Diffusionslänge DL des Redoxfluids 15 bei regulären Betriebsbedingungen des Energiespeichers 1 voneinander entfernt sind. Die mittlere Diffusionslänge DL ist hierbei schematisch durch einen Doppelpfeil angedeutet.

FIG 3 zeigt ein vereinzeltes Stück 21 eines chemischen Speichermaterials 20, wie es beispielsweise in dem Behältnis 16 nach FIG 2 in zufälliger Anordnung vorgesehen ist. Das vereinzelte Stück 21 weist hierbei die Form eines Torus auf, welcher eine wulstige Umrandung mit einer mittleren Ausdehnung A aufweist. Die Umrandung umgibt einen Kanal 22, welcher das vereinzelte Stück 21 durchdringt. Aufgrund der Ausdehnung A des vereinzelten Stückes 21 ist bspw. gewährleistet, dass einem beliebigen Punkt PSP in dem Speichermaterial 20, wenigstens ein Punkt PST in einem benachbarten Strömungskanal 25 (hier Kanal 22) zugeordnet werden kann, so dass deren Abstand geringer ist als die Diffusionslänge DL des Redoxfluids 15 (etwa $H_2$ und/oder $H_2O$) in dem Speichermaterial 20, welches Redoxfluid 15 zwischen der Anode 11 und dem Speichermaterial 20 zur chemischen Energiespeicherung bzw. Energieausspeicherung vermittelt. Fließt also das Redoxfluid 15 durch den Kanal 22 des vereinzelten Stücks 21, kann im Normalfall immer gewährleistet werden, dass die Entfernung der beiden betrachteten Punkte PSP und PST niemals größer ist als die mittlere Diffusionslänge DL. Die Umsetzungsrate sowie die Umsetzungsmenge ist damit ausreichend hoch, um einen regelmäßigen Betrieb des elektrochemischen Energiespeichers 1 zu gewährleisten.

FIG 4 zeigt eine schematische Darstellung eines elektrochemischen Energiespeichers 1 gemäß einer weiteren Ausführungsform der Erfindung in seitlicher Schnittansicht. Der Energiespeicher umfasst hierbei ein Behältnis 16, in welchem das chemische Speichermaterial 20 in Form von vereinzelten Stücken 21 angeordnet ist. Die Stücke 21 sind quaderförmig geformt, wobei einzelne Stücke 21 über ihre Längsseiten jeweils mit einem anderen Stück 21 in Kontakt sind. Eine Anzahl an derart in Kontakt stehenden Stücken formt einen flächigen Abschnitt mit den frei liegenden Längsseiten der Stücke 21 und definiert damit einen Teil eines Strömungskanals 25. Durch die Anordnung einer Mehrzahl solcher flächiger Abschnitte ergeben sich eine Anzahl von Strömungskanälen 25, die dazu geeignet sind, das Redoxfluid 15 in dem Behältnis 16 strömungstechnisch zu leiten.

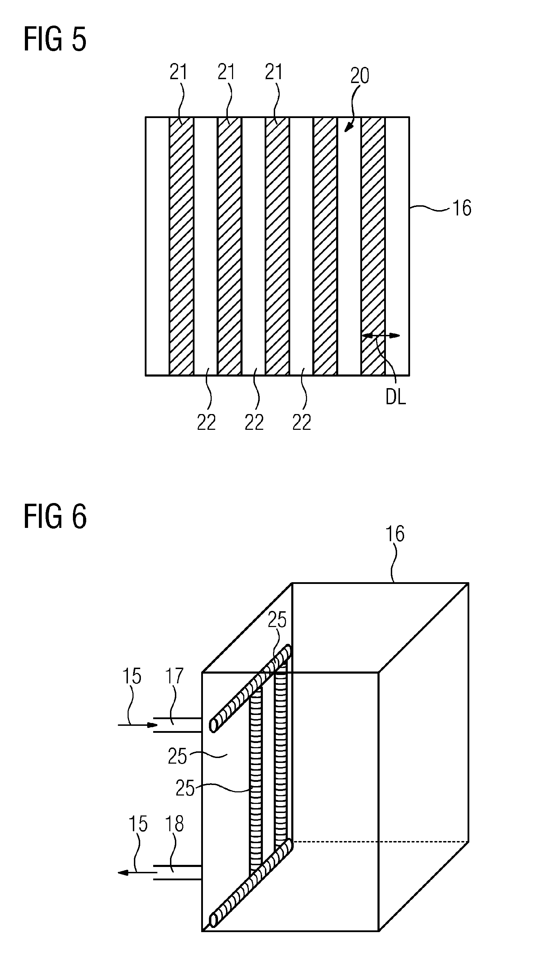

FIG 5 zeigt eine schematische Darstellung des elektrochemischen Energiespeichers 1 gemäß der Ausführungsform der Erfindung in FIG 4 in einer Schnittansicht von oben. Hierbei sind deutlich die regelmäßig angeordneten Strömungskanäle 25 zu erkennen, in welchen das Redoxfluid 15 geführt wird. Da die in Aufsicht gezeigte Breite der vereinzelten Stücke 21 geringer ist, als die Diffusionslänge DL des Redoxfluids 21 in dem chemischen Speichermaterial 20, ist gewährleistet, dass eine ausreichende Durchdringung des Speichermaterials 20 während des Betriebs erfolgen kann, also im Wesentlichen das gesamte Speichermaterial 20 während der Diffusionszeit vollständig umgesetzt werden kann.

FIG 6 zeigt eine schematische Darstellung eines elektrochemischen Energiespeichers 1 gemäß einer weiteren Ausführungsform der Erfindung in seitlicher Schnittansicht. Anders als die in FIG 4 gezeigte Ausführungsform, ist die in FIG 6 gezeigte Ausführungsform aus einem Block eines chemischen Speichermaterials 20 gefertigt, in welchen, etwa durch Bohrung oder eine andere geeignete Art der Formgebung, eine Anzahl an miteinander verbundenen Strömungskanälen 25 angeordnet sind, in welchem das Redoxfluid 15 geführt wird.

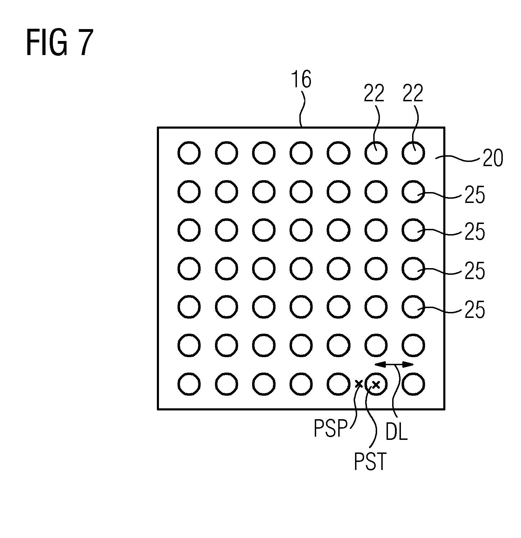

FIG 7 zeigt eine schematische Darstellung des elektrochemischen Energiespeichers 1 gemäß der Ausführungsform der Erfindung in FIG 6 in einer Schnittansicht von oben. Hierbei sind die Dimensionen der Querschnitte der Strömungskanäle 25 und deren Abstand voneinander derart gewählt, dass einem beliebigen Punkt PSP in dem Speichermaterial 20, wenigstens ein Punkt PST in einem benachbarten Strömungskanal 25 (hier Kanal 22) zugeordnet werden kann, so dass deren Abstand geringer ist als die Diffusionslänge DL des Redoxfluids 15 (etwa $H_2$ und/oder $H_2O$) in dem Speichermaterial 20. Dementsprechend kann während des Betriebs gewährleistet werden, dass im Wesentlichen das gesamte Speichermaterial 20 während der Diffusionszeit vollständig umgesetzt werden kann. Lediglich Bereiche in der Mitte einer Verbindungslinie diagonal zwischen zwei benachbarten Strömungskanälen 25, mögen mitunter nicht vollständig umgesetzt werden. Dieser Anteil macht jedoch an dem Gesamtanteil des chemischen Speichermaterials höchstens 20 Vol% aus.

Weitere Ausführungsformen ergeben sich aus den Unteransprüchen.

## Patentansprüche

1. Elektrochemischer Energiespeicher (1) mit externem, chemischem Speichermaterial (20), welcher eine Anode (11) und eine Kathode (12) aufweist, sowie einen Ionen leitenden Elektrolyten (13), der zwischen Anode (11) und Kathode (12) angeordnet ist,
**dadurch gekennzeichnet, dass** das Speichermaterial (20) in dem Energiespeicher (1) derart angeordnet ist, dass eine Mehrzahl an Strömungskanälen (25) in dem Speichermaterial (20) ausgebildet ist, und die Strömungskanäle derart ausgeformt sind, dass bei mindestens 80 Vol% des Speichermaterials (20) einem beliebigen Punkt (PSP) in dem Speichermaterial (20), wenigstens ein Punkt (PST) in einem benachbarten Strömungskanal (25) zugeordnet werden kann, so dass deren Abstand geringer ist als die Diffusionslänge (DL) eines Redoxfluids (15) in dem Speichermaterial (20), welches Redoxfluid (15) zwischen der Anode (11) und dem Speichermaterial (20) zur chemischen Energiespeicherung bzw. Energieausspeicherung vermittelt.

2. Elektrochemischer Energiespeicher gemäß Anspruch 1,
**dadurch gekennzeichnet, dass** die Strömungskanäle (25) im Wesentlichen stochastisch verlaufen.

3. Elektrochemischer Energiespeicher gemäß einem der vorhergehenden Ansprüche,
**dadurch gekennzeichnet, dass** das Speichermaterial (20) als eine Gesamtheit von vereinzelten Stücken (21) vorliegt, die insbesondere ohne Nahordnung zueinander angeordnet sind, und die Strömungskanäle (25) insbesondere stochastisch zwischen diesen Stücken (21) verlaufen.

4. Elektrochemischer Energiespeicher gemäß Anspruch 3,
**dadurch gekennzeichnet, dass** die vereinzelten Stücke (21) des Speichermaterials (20) eine maximale Ausdehnung von höchstens 30 mm aufweisen.

5. Elektrochemischer Energiespeicher gemäß einem der vorhergehenden Ansprüche 3 oder 4,
**dadurch gekennzeichnet, dass** wenigstens teilweise, bevorzugt jedes vereinzelte Stück (21) des Speichermaterials (20) einen Kanal (22) aufweist, welcher das Stück durchdringt.

6. Elektrochemischer Energiespeicher gemäß einem der Ansprüche 3 bis 5,
**dadurch gekennzeichnet, dass** das vereinzelte Stück (21) eine geometrische Symmetrie aufweist, welche vor allem eine Spiegelsymmetrie und/oder eine Drehsymmetrie ist.

7. Elektrochemischer Energiespeicher gemäß einem der Ansprüche 5 oder 6,
**dadurch gekennzeichnet, dass** der Kanal (22) durch das vereinzelte Stück derart verläuft, dass eine symmetrische Gesamtform von Stück (21) und Kanal (22) resultiert.

8. Elektrochemischer Energiespeicher gemäß einem der Ansprüche 3 bis 7,
**dadurch gekennzeichnet, dass** die Stücke (21) wenigstens teilweise die Form eines Torus aufweisen.

9. Elektrochemischer Energiespeicher gemäß einem der Ansprüche 3 bis 8,
**dadurch gekennzeichnet, dass** die Stücke (21) wenigstens teilweise die Form eines Quaders aufweisen, welche in dem Energiespeicher insbesondere derart angeordnet sind, dass sich ein Stück (21) an einer vorbestimmten Quaderfläche mit einem benachbarten Stück (21) in flächigem Kontakt befindet.

**10.** Elektrochemischer Energiespeicher gemäß einem der vorhergehenden Ansprüchen,
**dadurch gekennzeichnet, dass** die Strömungskanäle (25) wenigstens teilweise jeweils eine im Wesentlichen einheitliche mittlere Verlaufsrichtung aufweisen, bevorzugt parallel zueinander verlaufen.

**11.** Elektrochemischer Energiespeicher gemäß Anspruch 10,
**dadurch gekennzeichnet, dass** zwei benachbarte Strömungskanäle (25) nicht weiter als die mittlere Diffusionslänge (DL) voneinander entfernt sind.

**12.** Elektrochemischer Energiespeicher gemäß einem der vorhergehenden Ansprüchen,
**dadurch gekennzeichnet, dass** die Strömungskanäle (25) eine geometrische Symmetrie aufweisen, welche vor allem eine Spiegelsymmetrie und/oder eine Drehsymmetrie ist.

**13.** Elektrochemischer Energiespeicher gemäß einem der vorhergehenden Ansprüche,
**dadurch gekennzeichnet, dass** der Energiespeicher (1) als Metall-Luft-Batterie ausgebildet ist.

**14.** Elektrochemischer Energiespeicher gemäß einem der vorhergehenden Ansprüche,
**dadurch gekennzeichnet, dass** das chemische Speichermaterial (20) Eisen, Eisenoxid oder einer Mischung von Eisen und Eisenoxid umfasst.

FIG 1

FIG 2

## FIG 3

## FIG 4

FIG 5

FIG 6

FIG 7

Europäisches
Patentamt

European
Patent Office

Office européen
des brevets

**EUROPÄISCHER RECHERCHENBERICHT**

Nummer der Anmeldung

EP 14 15 0421

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2010 027690 A1 (SIEMENS AG [DE]) 26. Januar 2012 (2012-01-26) | 1-4,10, 11,13,14 | INV. C01B3/00 |
| Y | * Absätze [0006], [0008], [0021], [0024], [0032]; Abbildung 1 * | 5-9,12 | H01M8/06 H01M12/08 |
| | ----- | | C25B1/00 |
| Y | F. BENYAHIA ET AL: "Enhanced Voidage Correlations for Packed Beds of Various Particle Shapes and Sizes", PARTICULATE SCIENCE AND TECHNOLOGY, Bd. 23, Nr. 2, 1. April 2005 (2005-04-01), Seiten 169-177, XP055028273, ISSN: 0272-6351, DOI: 10.1080/02726350590922242 * Seite 171; Abbildung 1 * | 5-7 | H01M8/18 |
| | ----- | | |
| Y | US 2007/062115 A1 (BERRY GRANT [US] ET AL) 22. März 2007 (2007-03-22) * Absatz [0024] * | 5-8 | |
| | ----- | | |
| Y | DE 10 2012 211322 A1 (SIEMENS AG [DE]) 2. Januar 2014 (2014-01-02) * Absätze [0023], [0024], [0037]; Abbildungen 7, 8 * | 9 | RECHERCHIERTE SACHGEBIETE (IPC) |
| | ----- | | H01M |
| Y | DE 10 2012 208112 A1 (SIEMENS AG [DE]) 21. November 2013 (2013-11-21) * Absätze [0031] - [0033]; Abbildung 3 * | 12 | C01B C25B |
| | ----- | | |

Der vorliegende Recherchenbericht wurde für alle Patentansprüche erstellt

| Recherchenort | Abschlußdatum der Recherche | Prüfer |
|---|---|---|
| Den Haag | 6. Juni 2014 | Hofer, Astrid |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 14 15 0421

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-06-2014

| Im Recherchenbericht angeführtes Patentdokument | Datum der Veröffentlichung | Mitglied(er) der Patentfamilie | Datum der Veröffentlichung |
|---|---|---|---|
| DE 102010027690 A1 | 26-01-2012 | DE 102010027690 A1<br>EP 2596154 A1<br>US 2013112569 A1<br>WO 2012010343 A1 | 26-01-2012<br>29-05-2013<br>09-05-2013<br>26-01-2012 |
| US 2007062115 A1 | 22-03-2007 | US 2007062115 A1<br>WO 2007035512 A2 | 22-03-2007<br>29-03-2007 |
| DE 102012211322 A1 | 02-01-2014 | DE 102012211322 A1<br>WO 2014000984 A1 | 02-01-2014<br>03-01-2014 |
| DE 102012208112 A1 | 21-11-2013 | DE 102012208112 A1<br>WO 2013171044 A1 | 21-11-2013<br>21-11-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

• WO 2011070006 A1